# EUROPÄISCHE PATENTSCHRIFT

(11) **EP 3 161 183 B1**
(45) Veröffentlichungstag und Bekanntmachung des Hinweises auf die Patenterteilung: **21.08.2024**
(21) Anmeldenummer: 15732676.0
(22) Anmeldetag: 29.06.2015
(51) Int. Cl.: C23F 13/06, C23F 13/10, C23F 13/08, C04B 111/26

(54) **GALVANISCHES ANODEN-SYSTEM FÜR DEN KORROSIONSSCHUTZ VON STAHL IN BETON**
GALVANIC ANODE SYSTEM FOR THE CORROSION PROTECTION OF STEEL IN CONCRETE
SYSTÈME D'ANODE GALVANIQUE POUR LA PROTECTION CONTRE LA CORROSION DE L'ACIER DANS LE BÉTON

(30) Priorität: 27.06.2014 AT 5122014
(43) Veröffentlichungstag der Anmeldung: 03.05.2017
(73) Patentinhaber: Schwarz, Wolfgang, 1080 Wien (AT)
(72) Erfinder: SCHWARZ, Wolfgang, 1080 Wien (AT)
(74) Vertreter: Müller Schupfner & Partner Patent- und Rechtsanwaltspartnerschaft mbB (Muc)
(86) Internationale Anmeldenummer: PCT/EP2015/064721
(87) Internationale Veröffentlichungsnummer: WO 2015/197870

(56) Entgegenhaltungen:
- EP-A1- 1 318 247
- WO-A2-2011/031494
- US-A- 5 423 961
- US-A- 5 714 045
- US-A- 5 968 339
- US-A1- 2007 209 949
- US-B1- 6 569 296

## Beschreibung

Die Erfindung betrifft ein galvanisches Anodensystem für den Korrosionsschutz von Stahl in Beton, gemäß Anspruch 1. erfindungsgemäßen galvanischen Anodensystem ist die galvanisch verfügbare Oberfläche größer der galvanisch aktiven Oberfläche, wobei die galvanisch aktive Oberfläche dadurch gekennzeichnet ist, dass sie für den galvanischen Schutz der Stahlbewehrung zur Verfügung steht. Das erfindungsgemäße galvanische Anodensystem ist weiteres dadurch gekennzeichnet, dass während des Betriebs, währenddessen sich die Anode als Opferanode auflöst, die galvanisch aktive Anodenoberfläche (d.h. die galvanisch aktive Oberfläche der Metallanode) über einen Bereich von mehr als >75% konstant bleibt.

Korrosion der Stahlbewehrung ist eine der wesentlichsten Ursachen für erhöhte Unterhalts- und Reparaturkosten und in weiterer Folge für die Verkürzung der Nutzungsdauer von mit Stahl bewehrten Betonbauten. Korrosion der Stahlbewehrung wird durch das Eindringen von Chloriden in die Betonüberdeckung und/oder durch Karbonatisierung der Betonüberdeckung verursacht. Bauteile von Straßenbauwerken, wie z.B. Brücken, Tunnels etc., Parkgaragen, die häufig Frost-Tausalz ausgesetzt sind und Bauten die Meersalz ausgesetzt sind, wie zum Beispiel Hafenanlagen, Brücken, Appartements in Meeresnähe, sind von Chlorid induzierter Korrosion der Stahlbewehrung, hervorgerufen durch in den Beton eindringende Chloriden, gefährdet und betroffen. In solchen Bauteilen muss im Schadensfall der mit Chlorid belastete Beton bis hinter die Stahlbewehrung abgetragen und durch neuen frischen Beton oder Saniermörtel ersetzt werden. Diese Reparaturmethode ist sehr aufwendig, arbeits- und kostenintensiv. Als Alternative zur konventionellen Sanierung durch die Korrosion der Stahlbewehrung gefährdeter Bauwerke hat sich schon seit ca. 30 Jahren der kathodische Korrosionsschutz (KKS), wie er z.B. in EP1068164B1 beschrieben wird, bewährt. Als Alternative und/oder als Ergänzung zum KKS wird auch der galvanische Korrosionsschutz (GKS) eingesetzt, wie er z.B. in AT 1344/2004, EP1135538, EP0668373 und in US4506485 beschrieben wird. Die Wirkung des GKS beruht auf der Bildung eines galvanischen Elementes zwischen einer Opferanode und der Stahlbewehrung, wobei der Beton als Elektrolyt wirkt. Als Anodenmaterial werden üblicherweise Zink und seine Legierungen, seltener Aluminium und seine Legierungen eingesetzt. Die Anode wird üblicherweise entweder auf der Betonoberfläche oder in Bohrlöchern des zu schützenden Bauteiles, in installiert. Zur Vermeidung von sogenannten "incipient anodes" werden bei konventionellen Reparaturen von mit Chlorid kontaminierten Bauteilen im Grenzbereich zwischen Reparaturmörtel und Altbeton vorgefertigte galvanische Anoden an der Bewehrung befestigt und in Reparaturmörtel eingebettet. Ein solches galvanisches Anoden-System ist zum Beispiel in US6022469, US6303017, US6193857 beschrieben.

In der WO 2011/031494 A2 wird eine diskrete Zink-Opferanode offenbart, welche aus einer oder mehreren geschlitzten und gerillten Metallplatten hergestellt wird. Die Platten werden in einer parallelen, ebenen Anordnung mit herkömmlichen Befestigungsmitteln befestigt und ein elektrischer Anschlussdraht oder mehrere elektrische Anschlussdrähte mit einem geschlungenen Teil versehen, um die Anodenanordnung in einem bestimmten Abstand von einem Stahlverstärkungselement zu halten.

Der Schutz der Stahlbewehrung vor Korrosion, insbesondere in mit Chlorid kontaminiertem Beton, durch galvanische Anoden erfolgt dadurch, dass von der Metallanode mit einem negativeren Halbzellenpotential Elektronen zu dem korrodierenden Stahl fließen. So beträgt beispielweises das Halbzellenpotential von Zn/Zn²⁺ -0.763 V gegen die Normal-Wasserstoffelektrode (NHE) und die von Eisen Fe/Fe²⁺ -0,440 V gegen NHE. Für je zwei von der Zinkanode zum Stahl fließenden Elektronen geht ein Zinkatom in Lösung, am Bewehrungsstahl wird in der Porenlösung gelöster Sauerstoff reduziert.

Wird Zink als Metall für die galvanische Anode verwendet, so entspricht die Funktionsweise einer Zink-Luftbatterie mit einer maximalen Zellspannung von 1,6 Volt.

2 Zn + O₂ + 2 H₂O → 2 Zn(OH)₂ (Δ*U* = 1.6 V)

In der Praxis liegt die Zellspannung ("open circuit potential - OCP") zwischen 0,4 und 1,0 Volt.

Das Prinzip des galvanischen Schutzes beruht also darauf, dass anstelle der Stahlbewehrung die galvanische Zink-Anode korrodiert und verbraucht wird.

Die Nutzungsdauer solcher galvanischer Anoden hängt gegebener Massen von der Menge an zur Verfügung stehender Metallanode, dem Stromfluss zum Bewehrungsstahl und der Selbstkorrosion der Anode ab.

Bei bekannter Masse der für den galvanischen Schutz zur Verfügung stehenden Metallanode und dem Stromfluss (Menge der abgegebenen Elektronen in Coulomb) lässt sich die Nutzungsdauer der galvanischen Anode abschätzen. Sie liegt üblicherweise im Bereich von 10 - 25 Jahren.

Um einen verlässlichen, dauerhaften und vollständigen Schutz der Stahlbewehrung zu gewährleisten, muss ausreichender elektrischer Strom zwischen der galvanischen Anode und der Stahlbewehrung fließen. Der galvanische Korrosionsschutz ist dann in ausreichendem Masse gegeben, wenn kein Korrosionsstrom mehr fließt. Dies kann durch Makrozellenstrommessungen überprüft werden. In der Praxis hat sich ein rein auf Erfahrungswerten basierendes sogenanntes 100 mV Depolarisationskriterium bewährt, wie es zum Beispiel in der ISO EN 12 696 (2012) Norm beschrieben wird.

Der Stromfluss zwischen der galvanischen Anode und dem zu schützenden Bewehrungsstahl hängt, unter anderem, sehr stark von der aktiven Oberfläche der galvanischen Anode ab: Der Stromfluss ist, wie allgemein bekannt, in etwa proportional zur Oberfläche der Anode. In Abhängigkeit von der Geometrie der galvanischen Anode nimmt dadurch die galvanisch aktive Oberfläche der Anode ab.

So beträgt beispielsweise der Stromfluss bei einer zylinderförmigen Anode (Durchmesser 5 cm, Länge 10 cm) nach 50%igen Verbrauch, nach 67% und nach 75%igem Verbrauch noch 45% der Anfangsoberfläche. Bei einer quadratischen Anode (Durchmesser 12,5 cm, Höhe 1 cm) nach 50%igen Verbrauch, nach 70% und nach 75%igem Verbrauch noch 50% der Anfangsoberfläche.

Bei scheibenförmigen Anoden, wie sie auch in der Praxis eingesetzt werden, nimmt die galvanisch aktive Oberfläche während des Betriebs im Vergleich zum Materialverbrauch (d.h. Oberfläche im Verhältnis zum Volumen) noch rascher ab, und zwar rascher bei zylindrischen Scheiben als bei quadratischen Scheiben.

In der Praxis werden oft auch galvanische Anoden eingesetzt, deren Oberfläche durch eingravieren von Rillen in einen Zylinder, z.B. sternförmige Rillen, erhöht wird. Dies bewirkt jedoch nur zu Beginn des Betriebes eine im Verhältnis zum Volumen erhöhte Oberfläche und damit einen erhöhten Stromfluss zur zu schützenden Stahlbewehrung. Da die Spitzen der Rillen dem elektrischen Feld, das sich zwischen galvanischer Anode und der zu schützenden Stahlbewehrung ausbildet, stärker ausgesetzt sind als die "Täler" der Rillen, wird während des Betriebs vorzugsweise das Anodenmaterial der Rillenspitzen verbraucht, sodass nach relativ kurzer Betriebsdauer die Rillen abgetragen sind und nur noch eine zylinderförmige oder prismatische Anode vorliegt.

Dies hat zur Folge, dass während des Betriebs der galvanischen Anoden die aktive Oberfläche und damit der Stromfluss zur zu schützenden Bewehrungsstahloberfläche kontinuierlich abnehmen und folglich die Schutzwirkung der galvanischen Anode signifikant abnimmt. Dies kann dazu führen, dass z.B. nach 50%igem Verbrauch der galvanischen Anode der Stahl nicht mehr ausreichend vor Korrosion geschützt ist.

Während des Betriebs der galvanischen Anode wird Anodenmaterial verbraucht und es bilden sich an der Anodenoberfläche anodische Reaktionsprodukte. Zum Beispiel bildet sich während des Betriebs einer galvanischen Zinkanode an der Grenzfläche zum Beton Zinkhydroxid, das zu einer Behinderung der Stromflusses durch die Erhöhung des elektrolytischen Widerstandes führen kann und somit zu einer weiteren Abnahme des Stromflusses und damit zu einer weiteren Verringerung der Schutzwirkung.

Je geringer das Verhältnis von aktiver Oberfläche zum Volumen der galvanischen Anode ist, umso rascher nimmt die aktive Oberfläche im Verhältnis zum Volumen ab, wie mathematisch leicht gezeigt werden kann. Des Weiteren nimmt auch der schädliche Einfluss der Ablagerung von anodisch gebildeten Produkten, wie zum Beispiel Zinkhydroxid, zu.

Beide Prozesse, Abnahme der galvanisch aktiven Oberfläche und Zunahme der Ablagerung von anodischen Reaktionsprodukten kann bereits mittelfristig zu einem Ausfall der Schutzwirkung von galvanischen Anoden führen.

Aufgabe der vorliegenden Erfindung war daher, eine galvanische Anode zu konzipieren und herzustellen, bei der die galvanisch aktive Oberfläche so groß ist, dass auch nach 75% Verbrauch der Anode noch genügende galvanisch aktive Oberfläche zur Verfügung steht, um einen verlässlichen Korrosionsschutz der Stahlbewehrung zu gewährleisten. Vorzugsweise soll jedoch eine galvanische Anode konzipiert und hergestellt werden, bei der die galvanisch aktive Oberfläche während des Betriebes nur geringfügig, vorzugsweise nahezu gar nicht abnimmt und somit dauerhaft einen ausreichenden Stromfluss zum zu schützenden Bewehrungsstahl ermöglicht.

Die Aufgabenstellung konnte folgendermaßen gelöst werden:
Die galvanisch aktive Oberfläche, deren Abnahme während des Verbrauchs der galvanischen Anode und das Verhältnis Oberfläche/Volumen hängt naturgegeben von den Dimensionen der galvanischen Anode ab.

So verfügt eine zylinderförmige Anode (Durchmesser 2,58 cm, Länge 8 cm) über eine galvanisch aktive Oberfläche von 76 cm² und ein Volumen von 42 cm³ (entspricht einem Zinkgewicht von 300 g) mit einem O/V Verhältnis von 1,80. Wie bereits zuvor dargestellt, sind nach 75% Verbrauch nur noch 47% bzw. 35 cm² der Oberfläche verfügbar. Allgemein wird ein Wirkungsradius einer galvanischen Anode von ca. 20 cm angenommen, aus der Praxis ist dem Fachmann bekannt, dass für einen verlässlichen Korrosionsschutz ein Schutzstrom von mindestens 3 mA/m² Bewehrungsstahl erforderlich ist. In den meisten Bauteilen ist das Verhältnis Betonoberfläche/Oberfläche der Stahlbewehrung ungefähr 1. In Ausschreibungen wird eine Mindeststromdichte von 10 mA/m² und mehr verlangt, aus der Praxis ist jedoch bekannt, dass eine derart hohe Stromdichte nur zu Beginn erforderlich ist, bereits nach wenigen Monaten sinkt der Strombedarf auf ca. 3 - 5 mA/m². Er kann natürlich in feuchten Bauteilen deutlich höher sein.

Unter der Annahme eines Mindeststrombedarfs von 3 mA/m² ergibt sich ein für eine sich aus dem Wirkungsradius ergebende Wirkungsoberfläche von 0,12 m² ein Strombedarf von 0,38 mA. Die oben angeführte galvanische Anode muss daher bei einer Anfangsoberfläche von 76 cm² mindestens 5 µA/cm² oder 50 mA/m² Zinkoberfläche Strom liefern. Dies ist für eine Zinkanode bereits eine sehr hohe Strombelastung, nahe dem Diffusionslimit. Nach 75% Verbrauch steigt die Strombelastung auf 107 mA/m². Wie dem Fachmann bekannt ist, wird bei einer Strombelastung von ca. 50 - 75 mA/m² - je nach Betongüte (Porosität, Sättigungsgrad, Zementgehalt) - die Diffusionsgrenze erreicht, d.h. die Zinkanode kann maximal einen Strom von 50 - 75 mA/m² liefern. Die galvanische Zinkanode hat bereits nach einem 50%igen Verbrauch dieses Diffusionslimit und damit die theoretische Kapazitätsgrenze erreicht. Infolge der Ablagerung von Zinkhydroxid als anodisches Abbauprodukt, das den Ionentransport behindert, dürfte die Diffusionsgrenze noch deutlich niedriger liegen. Diffusionsgrenze bedeutet, wie dem Fachmann bekannt, die Begrenzung des galvanischen Stromes durch die Geschwindigkeit, mit der Ionen aus dem Porensystem des Betons an die Elektrodenoberfläche bzw. von der Elektrodenoberfläche in das Porensystem des Betons diffundieren. Übersteigt der galvanische Strom diese Grenze, so nimmt die Konzentration der elektrochemisch aktiven Ionen an der Elektrodenoberfläche ab und damit der galvanische Strom. Es kann somit zwischen den Elektroden nicht mehr Strom fließen als von den Ionen Ladungen zwischen den Elektroden transportiert werden. Der Grenzdiffusionsstrom ist daher der Strom, der von einer galvanischen Anode theoretisch maximal geliefert werden kann, ohne Berücksichtigung von anderen Einflussgrößen wie Überspannung, Passivierung durch Übersäuerung an der Anodenoberfläche, Erhöhung des Diffusionswiderstandes und des elektrolytischen Widerstandes durch Ablagerung von anodischen Produkten wie zum Beispiel Zinkhydroxid etc.

In Einzelanoden, die zur Verhinderung von "incipient anodes" in Beton eingesetzt und/oder eingebettet werden, beträgt das Gewicht der galvanischen Zinkanode üblicherweise 100 - 200 g. Durch Anbringen von Längsrillen (z.B. sternförmiger Querschnitt) oder Querrillen (auf einen Zylinder aufgesetzte Scheiben - eingefräst oder gegossen) kann zwar die Anfangsoberfläche erhöht werden, spätestens nach ca. 50%igem Verbrauch der galvanischen Anode sind die Rillen aufgebraucht. In Oberflächenanoden beträgt das Gewicht des Zinks üblicherweise 2 - 2,5 kg/m².

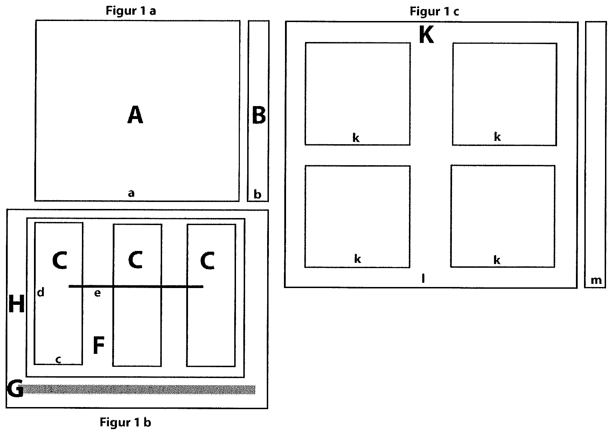

Eine galvanische Einzelanode, welche beispielsweise einen massiven Zinkwürfel (siehe Figur 1a: Kantenlänge 3,48 cm, a = b) enthält, mit einem Volumen von 42 cm³ und einem Gewicht von 300g und einer Oberfläche von 72 cm² (Gewicht, Volumen und Oberfläche, entspricht in etwa den Dimensionen des Zinkzylinders aus dem oben angeführten Beispiel) würde spätestens nach 50%igem Verbrauch das Diffusionslimit erreichen (nach 50%igem Verbrauch stehen noch 63% der ursprünglichen Oberfläche zur Verfügung). Bei höherem Verbrauch ließe sich kein verlässlicher Korrosionsschutz mehr gewährleisten.

In Figur 1b ist die Verwendung von z.B. 3 äquivalenten Zinkscheiben anstelle eines Zinkwürfels dargestellt: Die Zinkscheiben (c x d =1,16 x 3,48 cm) mit einem Gesamtgewicht von 300g sind in C in der seitlicher Ansicht dargestellt. Die Platten sind untereinander mit einem Zink Stab e elektrisch verbunden und in einer geeigneten elektrolytisch leitfähigen Matrix F eingebettet. Die Einzelanode, bestehend aus den Zinkplatten C und deren Verbindung untereinander e und der elektrolytisch leitfähigen Matrix F, ist nahe der Stahlbewehrung G in Beton H eingebettet und elektrisch mit der Stahlbewehrung verbunden.

Von der galvanisch verfügbaren Gesamtoberfläche (121 cm²) sind nur maximal die Hälfte galvanisch aktiv und das Diffusionslimit wäre ebenfalls bereits nach 50% des Verbrauches der galvanischen Anode erreicht und ein weiterer Korrosionsschutz der Stahlbewehrung nicht mehr gewährleistet. Die Oberfläche nimmt während des Betriebes kontinuierlich ab, nach 50%igem Verbrauch beträgt sie noch 70%, nach 75%igem Verbrauch noch 50% der Anfangsoberfläche.

Dies gilt natürlich nicht nur für rechtwinklige Scheiben bzw. Platten sondern auch für kreisförmige oder beliebig geformte Scheiben oder Platten.

Wird anstelle eines Zylinders, eines Würfels oder Scheiben eine Zinkplatte, zum Beispiel eine quadratische Zinkplatte mit einer Kantenlänge von a = 10 cm und einer Höhe von b = 0,42 mm mit einer Oberfläche von 100 cm² und einem Gewicht von 300 g Zink mit einem Volumen von 42 cm³ verwendet, so beträgt die minimale Stromdichte, die zur Erhaltung des Korrosionsschutzes der Stahlbewehrung erforderlich ist, 6,2 µA/cm² bzw. 62 mA/m². Die Oberfläche der galvanischen Anode bleibt zwar während des Betriebes der Einzelanode konstant, die Stromdichte liegt jedoch weiterhin im Bereich der Diffusionskontrolle.

An der Grenzfläche zwischen einer galvanischen Zink-Anode und der Porenflüssigkeit des elektrolytisch leitenden Bindemittels, in den die galvanischen Anode eingebettet ist, bilden sich anodische Produkte: Zink wird zu doppelt positiv geladenen Zink Ionen oxidiert, die in Lösung gehen, mit Wasser zu Zinkhydroxid und Säure - Protonen - reagiert. Das Zinkhydroxid lagert sich üblicherweise an und nahe der Grenzfläche zur galvanischen Anode ab und kann zu einer Erhöhung des elektrolytischen Widerstandes führen. Bilden sich die Zink Ionen rascher, als sie von der Anodenoberfläche wegdiffundieren können, so bildet sich direkt an der Anodenoberfläche eine Zinkhydroxidschicht, die Ionendiffusion stark behindern kann. Die gebildete Säure, mit z.B. Chlorid Ionen, verbindet sich zu Salzsäure. Zink wird im neutralen bis schwach basischen Bereich durch die Bildung einer impermeablen Zinkoxidschicht passiv. Zink wird erst im stark alkalischen Bereich galvanisch aktiv, wie in den zuvor zitierten Patenten (US6022469, US6303017, US6193857) beschrieben. Erfolgt die Säurebildung an der Grenzfläche zur galvanischen Anode rascher als Alkali Ionen (OH-) aus dem Porenraum des elektrolytisch leitenden Bindemittels nachdiffundieren können, so sinkt der pH ab und die galvanische Anode passiviert. Dies gilt vor allem für ionenleitfähige Matrix. Im sauren Bereich, vor allem in Gegenwart von Chloriden, erfolgt Selbstkorrosion des Zinks unter Wasserstoffentwicklung - dies entspricht einem internen Kurzschluss der Zinkanode, der verhindert das Schutzstrom zur Bewehrung fließt.

Daraus geht hervor, dass, um einen verlässlichen Korrosionsschutz der Stahlbewehrung zu gewährleisten, der galvanischen Schutzstrom, der pro Flächeneinheit von der galvanischen Anode zur Stahlbewehrung fließt, begrenzt werden muss, derart, dass die anodischen Prozesse nicht zu einer Absenkung des pH Wertes und zu einer massiven Bildung von anodischen Produkten, wie z.B. Zinkhydroxid, führen. Es zeigte sich, dass dies erreicht werden kann, wenn maximal 20% des Diffusionsgrenzstromes von der galvanischen Anode zur Stahlbewehrung fließen - d.h. max. 1 - 1,4 µA/cm² bzw. 10 - 15 mA/m² galvanisch aktiver Anodenoberfläche.

Die oben angeführten Beispiele zeigen anschaulich, dass dieses Ziel mit den in Praxis verwendeten Einzelanoden nur beschränkt oder gar nicht erreicht werden kann.

Die einfachste Lösung wäre die Erhöhung der galvanisch aktiven Oberfläche der galvanischen Anoden. Aus praktischen Gründen müssen Einzelanoden handlich bleiben, um auf der Baustelle eingebaut zu werden oder in Bohrlöcher eingesetzt zu werden. Die Erhöhung der Oberfläche durch Profilierung - z.B. Längs- oder Querrillen - bringt mittel- bis langfristig keinen Vorteil, wie oben gezeigt wurde.

Die optimale Lösung wäre eine galvanische Anode mit einer großen Oberfläche die während des Betriebes der galvanischen Anode nicht signifikant abnimmt.

Eine Vergrößerung der Oberfläche kann z.B. durch die Änderung der Struktur der galvanischen Anode erreicht werden, indem zum Beispiel in eine Metallplatte Löcher eingefräst oder Bohrlöcher durch Ziehen der Metallplatte vergrößert werden.

Dies wird Beispielhaft in Figur 1c anhand einer Platte K schematisch dargestellt, in die vier quadratische Löcher mit einer Kantenlänge von k = 4,66 cm eingefräst wurden. Die Dicke der Platte beträgt m = 0,70 cm, der Abstand der quadratischen Löcher voneinander die doppelte Dicke, nämlich 1,4 cm. Die Seitenlänge der Loch-Platte beträgt l = 12,11 cm, das Volumen 42 cm³, wenn die Loch-Platte aus Zink besteht, dann betrüge das Gewicht 300 g.

Die geometrische Oberfläche der Platte (die in diesem Fall mit der geometrischen Gesamtoberfläche identisch ist) beträgt 145 cm². Die erwartete galvanisch aktive Oberfläche der Platte, d.h. die der Stahlbewehrung zugewandte Oberfläche - ohne Rückseite und ohne Seitenflächen - beträgt 60 cm². Die erwartete galvanisch aktive Oberfläche der Anode ist kleiner als die geometrische Oberfläche und reicht für einen verlässlichen Korrosionsschutz nicht aus.

Versuche haben nun überraschenderweise ergeben, dass auch die Seitenflächen der Löcher und der Platte bis zu einer gewissen Dicke (m≤2k, vorzugsweise m≤2k, wobei m die Dicke und k der Lochquerschnitt ist, siehe Figur 1c,) galvanisch aktiv sind. Wird diese Dicke (m in Figur 1c) nicht überschritten so ist, bei ausreichendem Lochquerschnitt, auch die Rückseite der Loch-Platte galvanisch aktiv.

Damit erhöht sich die galvanisch aktive Oberfläche der galvanischen Anode auf 207 cm². Unter der Annahme eines Wirkungsradius von 20 cm, wie zuvor beschrieben, ergibt sich damit ein minimaler galvanischer Strom, der für einen verlässlichen Korrosionsschutz der Stahlbewehrung erforderlich ist, von ca. 1,7 µA/cm² bzw. 17 mA/m². Dieser Wert liegt zwar immer noch deutlich oberhalb des Wertes, der für einen optimalen Betrieb einer Anode nicht überschritten werden sollte, jedoch bereits nur noch bei 20 - 35% des limitierenden Diffusionsstromes.

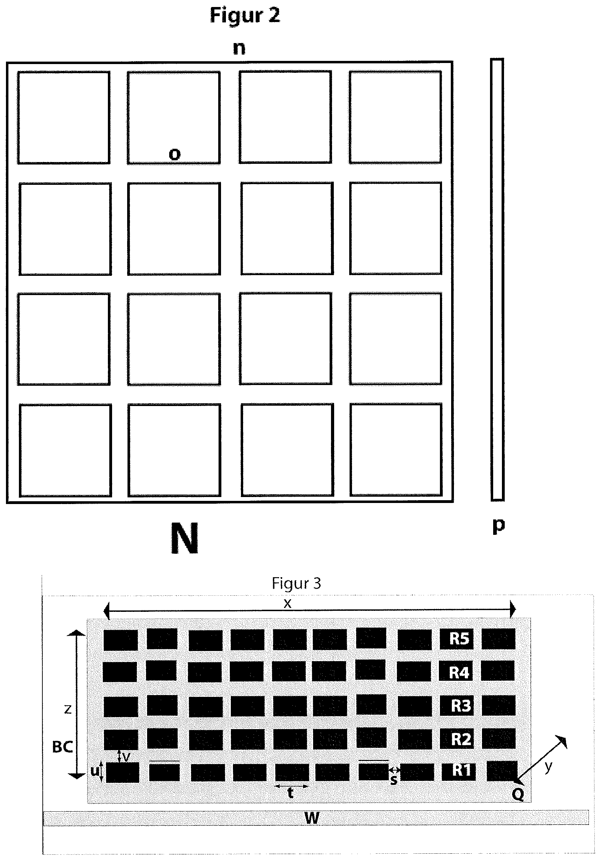

In Figur 2 ist eine Lochplatte N mit der vierfachen Anzahl von Löchern - 16 Stück/Platte - dargestellt. Bei einer Seitenlänge von n =11,42 cm, einer Kantenlänge der Löcher von o = 1,79 cm und einer Plattenstärke von p = 0,53 cm ergibt sich, bei einem Volumen von 42 cm³ (entspricht 300 g Zink), bei einer geometrischen Oberfläche (die in diesem Fall mit der geometrischen Gesamtoberfläche identisch ist) von 130 cm² eine galvanisch aktive Oberfläche von 270 cm² - die Löcher sind groß genug und die Platte ist genügend dünn, sodass auch die Rückseite der Platte und alle Seiten der Platte galvanisch aktiv sind und nicht nur die der zu schützenden Stahlbewehrung zugewandte Seite. Dies ergibt bei einem Wirkungsradius von 20 cm eine minimale Stromdichte von 1,4 µA /cm² bzw. von 14 mA/m².

Eine äquivalente Lochplatte mit demselben Gewicht und Volumen (42 cm³), mit einer Plattenstärke von p = 0,25 cm, mit 100 Löchern/Platte, einer Kantenlänge der Löcher von o = 1,00 cm verfügt, bei einer geometrischen Oberfläche von 266 cm², über eine aktive galvanische Oberfläche von 433 cm². Unter derselben Annahme wie oben, beträgt der minimale galvanische Strom für einen sicheren Korrosionsschutz der Stahlbewehrung 0,87 µA/cm² bzw. 8.7 mA/m². Dieser Wert liegt im Bereich der optimalen Betriebsbedingungen von galvanischen Anoden. Durch die strukturelle Änderung einer galvanischen Platte, z.B. durch Anbringen von Löchern, kann eine Verdopplung der galvanisch aktiven Oberfläche erzielt werden. Dies führt dazu, dass die galvanischen Ströme/Anodenoberfläche in einem Bereich liegen, in dem ein optimaler und verlässlicher Korrosionsschutz der Stahlbewehrung gewährleistet ist.

Während des Betriebes der galvanischen Anode nimmt jedoch durch den Verbrauch des Anodenmaterials nicht nur das Volumen sondern auch die Oberfläche der galvanischen Anode ab, so nimmt sie in dem oben genannten Beispiel nach 50% des Verbrauches an Anodenmaterial, unter der Annahme eines allseitig gleichmäßigen Verbrauches des Anodenmaterials, von 433 cm² auf 326 cm² und nach 75%igem Verbrauch auf 231 cm² ab. Damit liegen die minimalen galvanischen Ströme nach 50% des Verbrauches bei 1,16 µA/cm² bzw. 11,6 mA/m² und nach 75%igem Verbrauch bei 1,63 µA/cm² bzw. 16 mA/m².

Dies würde bedeuten, dass die oben beschriebene Anode bis mindestens 50% ihrer Nutzungsdauer die Stahlbewehrung verlässlich vor Korrosion schützt, darüber hinaus nimmt die Verlässlichkeit ab und überschreitet nach 75% der Nutzungsdauer den verlässlichen Bereich - max. Stromdichte von 15 mA/m².

Überraschenderweise zeigte sich jedoch, dass bei einer galvanischen Zinkanode mit den oben beschriebenen Dimensionen der tatsächliche galvanische Verbrauch des Zinks nicht allseits gleichmäßig erfolgt, sondern dass die Dicke der Zinkplatte um ca. 1/3 rascher abnimmt als der Abstand zwischen den Löchern. Dies führte dazu, dass die tatsächliche Abnahme der aktiven galvanischen Oberfläche der Zinkanode langsamer erfolgte: Nach 50% Verbrauch der Zinkanode betrug die galvanisch aktive Oberfläche 362 cm² und nach 75% Verbrauch noch 276 cm², sodass die minimalen galvanischen Ströme nach 50% des Verbrauches bei 10,4 µA/cm² bzw. 10,4 mA/m² und nach 75%igem Verbrauch bei 1,34 µA/cm² bzw. 13 mA/m². Diese Stromdichten liegen im Bereich des sicheren Korrosionsschutzes der Stahlbewehrung.

Diese Beschränkungen gelten im Wesentlichen für vorfabrizierte Einzelanoden, die zum Beispiel in den Beton eingebettet, in Bohrlöcher eingesetzt oder auf die Betonoberfläche aufgesetzt werden. Aus praktischen und technischen Gründen sollten die Einzelanoden mit handhabbaren Dimensionen - Umfang, Kantenlänge, Durchmesser, ausgestattet sein und einen ausreichenden und verlässlichen Schutz der Stahlbewehrung in einem Wirkungsradius von 20 cm, der eine Oberfläche von 1250 cm² abdeckt, zu gewährleisten. Der Korrosionsschutz der Einzelanode in dem angeführten Beispiel wirkt auf ein mehrfaches der geometrischen Oberfläche der Einzelanode. Wobei unter Korrosionsschutz des Bewehrungsstahls der aktive Korrosionsschutz des Stahls und/oder der präventive Korrosionsschutz zu verstehen ist. Aktiver Korrosionsschutz schützt bereits korrodierenden Stahl, präventiver Korrosionsschutz schützt potentiell durch Korrosion gefährdeten, aber noch nicht aktive korrodierenden, Stahl. Präventiver Korrosionsschutz ist vor allem zur Verhinderung von sogenannten "incipient anodes" von großem Vorteil für die Verlängerung der Nutzungsdauer von mit Stahl bewehrten Betonbauten.

Diese Beschränkungen gelten jedoch in weitaus geringerem Ausmaß für Oberflächenanoden, die auf die Betonoberfläche aufgetragen werden und die Stahlbewehrung direkt unterhalt der galvanischen Anode schützen. Der Wirkungsbereich von Oberflächenanoden ist, je nach Größe der Oberflächenanode, nahezu identisch mit deren geometrischer Oberfläche. Oberflächenanoden wirken in den Randbereichen bis zu ca. 10 cm über die eigene geometrische Oberfläche hinaus. Üblicherweise werden Oberflächenanoden, wenn möglich, so installiert, dass sie den gesamten zu schützenden Bereich abdecken. Im Unterschied dazu ist der Wirkungsbereich von Einzelanoden fast immer grösser als deren geometrische Oberfläche. Bei Oberflächenanoden, die z.B. 100 m² Betonoberfläche abdecken, ist der Wirkungsbereich nahezu identisch mit der geometrischen Oberfläche. Kleine Oberflächenanoden, die einen Bereich von < 1 m² abdecken, können auch als Einzelanoden betrachtet werden.

Die Vergrößerung der galvanisch aktiven Oberfläche durch strukturelle Änderungen der galvanischen Anode derart, dass die galvanisch aktiven Oberfläche der galvanischen Anode grösser ist als die geometrische Oberfläche, bewirkt, dass eine galvanische Anode, im Folgenden auch als "Lochanode" bezeichnet, eingesetzt als Einzelanode, die Stahlbewehrung in einem Radius, der mindestens dem doppelten Durchmesser der Einzelanode entspricht, verlässlich über mindestens 75% der Nutzungsdauer der galvanischen Anode schützen kann.

Wobei die galvanische Anode nicht notwendigerweise aus einer Lochplatte oder Lochblech, sondern z.B. auch aus einem Gitter, Netz oder einer Anordnung von Drähten und Stäben bestehen kann, mit der die Wirkung erzielt werden kann. Die Löcher müssen nicht notwendigerweise quadratisch sein, sondern können auch beliebige vieleckige bis runde und ellipsenförmige Formen aufweisen. Wesentlich ist, dass der Durchmesser der Löcher groß genug ist, damit das elektrische Feld sich auch flächig auf der Rückseite der galvanischen Anode ausbilden kann. Dazu sollte der kleinste Lochdurchmesser mindestens 50%, vorzugsweise mindestens 100%, besonders bevorzugt mindestens 200% der Höhe der galvanischen Anodenplatte bzw. Gitters betragen.

Die Beispiele zeigen, dass sich der Wirkungsradius einer im Beton eingebetteten Einzelanode die Stahlbewehrung bis zu 20 cm und damit ein Mehrfaches des Volumens der Einzelanode beträgt. Im Laufe des Betriebs der galvanischen Anode, während dessen die galvanische Anode verbraucht wird, nimmt die galvanisch aktive Oberfläche der Anode ab, und zwar nach 50%igem Verbrauch um ca. 15 - 25% je und nach 75%igem Verbrauch um ca. 30 - 40%, je nach Geometrie der Anode.

Da eine galvanische Anode mindestens bis zum 75%igen Verbrauch der Anode die Stahlbewehrung verlässlich vor Korrosion schützen sollte, bewegt man sich, unter der Annahme eines Wirkungsbereiches mit einem Radius von 20 cm, gegen Ende der Nutzungsdauer im Grenzbereich der Verlässlichkeit. Zudem nimmt die Schutzwirkung der Anode proportional zum Oberflächenverlust ab. Dies bedeutet, dass der Wirkungsbereich für den verlässlichen Korrosionsschutz auf der Basis der nach 75%igem Verbrauch der galvanischen Anode verfügbaren galvanisch aktiven Oberfläche ausgelegt werden muss.

Eine galvanische Anode, vor allem eine Einzelanode, deren galvanisch aktive Oberfläche während Ihrer Nutzung nicht oder nur unwesentlich abnimmt, wäre von sehr großem Vorteil im Hinblick auf Verlässlichkeit und im Hinblick auf Ihren Wirkungsradius. Ein höherer Wirkungsradius bewirkt eine signifikante Kostenersparnis: Ein 40% größerer Wirkungsradius bewirkt ein Kostenersparnis für den Korrosionsschutz des Bewehrungsstahls von fast 50%, es werden nur die Hälfte der Einzelanoden benötigt um die Stahlbewehrung im selben Wirkungsbereich zu schützen.

In Figur 3 ist eine galvanische Anode dargestellt, bestehend aus übereinander gestapelten erfindungsgemäßen galvanischen Teilanoden Rx (R1, R2, R3....), zum Beispiel Streifen einer Lochplatte, gelochter Folie, Gitters oder Netzes, bestehend aus einem galvanisch aktiven Metall, vorzugsweise Zink. Die gestapelten Teilanoden sind in einer elektrolytisch leitenden Matrix Q eingebettet, und bilden, untereinander elektrisch verbunden, eine "Stapelanode", von der, eingebettet in Beton X, ein galvanischer Strom zum Bewehrungsstahl W fließt, der bei ausreichender Stromdichte vor Korrosion geschützt wird.

Überraschenderweise zeigte sich, dass bei geeigneter Wahl der Lochgröße s, der Dicke u der Lochplatte und des Abstandes der Lochplatten voneinander (z. B Lochplatte R2 von Lochplatte R1), die galvanisch aktive Oberfläche der galvanischen Anode über mehr als 75% der Nutzungsdauer der galvanischen Anode überraschenderweise nahezu konstant bleibt.

Es zeigte sich zudem, dass durch geeignete Wahl der Lochgröße s, der Dicke u der Lochplatte und des Abstandes v der Lochplatten voneinander überraschenderweise die Größe der galvanisch aktiven Oberfläche gezielt gesteuert werden konnte:
Bei ausreichend kleinem Lochdurchmesser s, jedoch groß genug damit die die Rückseite der Lochplatte galvanisch aktiv ist, und ausreichend großem Abstand v der Lochplatten voneinander, ist zu Anfang des Betriebs der galvanischen Anode nur die Teilanode R1 galvanisch aktiv. Am Anfang wird nur das Anodenmaterial der "Lochanode" R1 verbraucht, wie bereits zuvor beschrieben. Durch den Verbrauch nimmt die Dicke u und in geringerem Ausmaß der Abstand t der Löcher voneinander ab. Dadurch nimmt der Durchmesser s der Löcher kontinuierlich zu. Durch die Zunahme des Lochdurchmessers s und der damit verbundenen Zunahme der Lochgröße kann sich das elektrische Feld in der ionenleitenden Matrix Q weiter ausbreiten. Erreicht das elektrische Feld die galvanische Teilanode R2, so wird letztere und somit auch die Oberfläche von R2 "aktiviert". Mit zunehmender Vergrößerung der Löcher der Teilanode R1 vergrößert sich somit der aktive Teil der Oberfläche der galvanisch aktiven Anode R2. Wenn die Teilanode R1 aufgebraucht ist, übernimmt die Teilanode R2 die Rolle der Teilanode R1 und bei ausreichender Zunahme der Lochgröße von R2 wird die Teilanode R3 aktiviert. So setzt sich die Aktivierung der Teilanoden fort, ohne dass es zu einer signifikanten Änderung der galvanisch aktiven Oberfläche der Gesamtanode kommt.

Bei geeigneter Wahl der Parameter - Lochgröße s, der Dicke u der Lochplatte, des Abstandes v der Lochplatten voneinander und der elektrolytischen Leitfähigkeit der ionenleitenden Matrix Q kann somit erreicht werden, dass die galvanisch aktive Oberfläche der Stapelanode, je nach Anzahl der Teilanoden der Stapelanoden und Einstellung der genannten Parameter, über einen Bereich von mehr als > 75% nahezu konstant bleibt.

Die Ausbreitung des elektrischen Feldes zwischen dem zu schützenden Bewehrungsstahl und den galvanischen Teilanoden wird von den genannten Parametern wir folgt beeinflusst:
Vergrößerung der Reichweite des elektrischen Feldes durch:
- Vergrößerung des Lochdurchmessers s/Lochquerschnittsfläche
- Verminderung der Platten/Blech/Drahtstärke u
- Erhöhung der elektrolytischen Leitfähigkeit der ionenleitfähigen Matrix Q

Die Reichweite des elektrischen Feldes bestimmt, wann die von der zu schützenden Stahlbewehrung weiter entfernten Teilanoden der Stapelanode galvanisch aktiviert werden. Der Zeitpunkt bzw. bei welchem Verbrauch der jeweiligen galvanischen Teilanode (Rx) die nächst weiter entfernte Teilanode (Rx+1) galvanisch aktiviert wird, hängt natürlich auch vom Abstand v der Teilanoden ab, je geringer der Abstand umso früher wird die weiter entfernte Teilanode aktiviert und vice versa.

Bei gegebener Struktur der Stapelanode bestimmt somit die Lochgröße, analog zu einer Lochblende einer Kamera, die Reichweite des elektrischen Feldes und somit wann die folgenden Teilanoden galvanisch aktiviert werden.

Bei ausreichend großer "Lochblende" wird die folgende Teilanode und eventuell sogar die zweite folgende Teilanode von Beginn an aktiviert. Eine derart strukturierte Teilanode zeichnet sich durch eine hohe galvanisch aktive Oberfläche aus - derart lässt sich die galvanisch aktive Oberfläche im Vergleich zur geometrischen Oberfläche Vervielfachen. Erfindungsgemäß lässt sich die Anzahl der galvanisch aktiven Teilanoden sowohl durch die Größe der "Lochblende" als auch durch den Abstand der Teilanoden voneinander steuern, und zwar unabhängig voneinander oder simultan.

Dies bringt insbesondere Vorteile bei der Herstellung von besonders kleinen Einzelanoden mit hoher galvanischer Reichweite als auch Vorteile für den Einsatz in mit Chloriden stark kontaminierten Betonbauteilen, in denen der Korrosionsschutz der Stahlbewehrung hohe galvanische Ströme erfordert.

Die "Lochanode", die dadurch gekennzeichnet ist, dass deren galvanisch aktive Oberfläche grösser ist, vorzugsweise mindestens doppelt so groß, als deren geometrische Oberfläche muss nicht notwendigerweise aus einer mit Löchern versehenen Platte, Blech, aus einem Netz oder Gitter bestehen, sondern kann auch durch geeignete Anordnung von Drähten und Stäben eines geeigneten galvanisch aktiven Metalls hergestellt werden.

Die Stapelanode, die dadurch gekennzeichnet ist, dass während des galvanischen Betriebes die galvanisch aktive Oberfläche nicht oder nur geringfügig abnimmt, und zwar vorzugsweise bis mindestens 50% des Verbrauchs der galvanischen Anode, insbesondere bis mindestens 75% des Verbrauchs der galvanischen Anode, muss nicht notwendigerweise aus einer Stapel-Anordnung wie in Figur 3 dargestellt, bestehen. Sie kann auch aus einem dreidimensionalen Netzwerk von Drähten, Stäben, Gittern, Netzen bestehen, z.B. gefaltete Gitter.

Eine bevorzugte Herstellung eines dreidimensionalen galvanischen Anoden-Netzwerkes besteht aus einem "Metallschwamm" der mit ionenleitfähiger Matrix gefüllt ist. Ein solcher Metallschwamm, bestehend aus Zink, kann dadurch hergestellt werden, dass der Zinkschmelze ein lösliches hitzebeständiges Salz zugegeben wird oder vice-versa, das nach dem Abkühlen der Schmelze herausgelöst wird. Mit der Korngrösse des wasserlöslichen Salzes, z.B. Natriumchlorid, kann die Porengrösse des Schwammes gezielt eingestellt werden. Dies ist von großer Wichtigkeit für die Funktionsweise, insbesondere für die dauerhafte galvanische Aktivität der "Metallschwammanode": Wie bereits beschrieben, bilden sich während der galvanischen Funktion Abbauprodukte, aus Zink und seinen Legierungen bildet sich Zinkhydroxid (Zn(OH)₂), das ein 2,3-fach größeres Volumen beansprucht als das Zinkmetall. Das galvanisch gebildete Zinkhydroxid füllte daher das innere Porenvolumen aus. In Gegenwart von Chlorid kann sich auch in Wasser unlösliches Zinkhydroxochlorid bilden, das wie ein Zement wirkt. Bei zu kleinem Porenvolumen "verstopfen" die galvanisch gebildeten Produkte die Poren und verhindern den Ionentransport - die Ionenleitfähigkeit nimmt bis hin zum Verlust der Ionenleitfähigkeit ab. Da in einem Schwamm, im Unterschied zur "Stapelanode" kein ausfüllbares Volumen zwischen den einzelnen Gitterlagen zur Verfügung steht, muss daher das Porenvolumen des Schwammes groß genug seine, um die galvanische gebildeten Abbauprodukte aufnehmen zu können. Es zeigte sich, dass dies erreicht werden kann, wenn die galvanisch aktive Oberfläche mindestens 4-mal, vorzugsweise 6-mal so groß ist als die geometrische Oberfläche - äußere Oberfläche - des Schwammes.

Die galvanische Anode besteht aus dem Metallschwamm, einer geeigneten ionenleitfähigen Matrix, die die Poren und Zwischenräume im Schwamm ausfüllt und den Schwamm umhüllt und geeigneten elektrischer Kontakten, z.B. galvanisierte Eisendrähte, für die elektrische Verbindung zu dem zu schützenden Bewehrungsstahl. Die "Befüllung" der Metallschwammanode mit einer ionenleitfähigen Matrix kann zum Beispiel durch Eintauchen unter Vakuum in ein flüssiges Bindemittel erfolgen, das dann in um den Schwamm aushärtet oder geliert. Die ionenleitfähige Matrix sollte vorzugsweise galvanische Abbauprodukte volumenmässig aufnehmen können, z.B. in dem eine feste ionenleitfähige Matrix über ein ausreichendes Porenvolumen verfügt -vorzugsweise > 20 Vol%.

Die verschiedenen strukturellen Varianten der "galvanischen Stapelanode" können auch unter dem Sammelbegriff "galvanische 3D-Anode" zusammengefasst werden.

Für das Verständnis der Funktionsweise der "galvanischen 3D-Anoden" und der "Lochanoden" sind folgende Definitionen zusammengefasst:
Galvanisch aktive Oberfläche (GAO): Die galvanisch aktive Oberfläche ist der Teil der galvanischen 3D-Anode und/oder Lochanode, von dem galvanischer Strom zum Bewehrungsstahl fließt und galvanisch aktives Metall, bei einer galvanischen Zinkanode Zink, abgebaut wird und in anodische Produkte, z.B. Zinkhydroxid, umgewandelt wird. Wobei der eine Prozess, Stromfluss, den anderen Prozess, Abbau, bedingt und vice versa.

Die galvanisch aktive Oberfläche der Metallanode ist mindestens 1,3 mal so groß wie deren geometrische Oberfläche (GO), gegebenenfalls 1,4 mal, vorzugsweise 1,7 mal so groß, insbesondere doppelt so groß.

Galvanisch verfügbare Oberfläche (GVO): Die galvanisch verfügbare Oberfläche ist die Oberfläche der Anode, die insgesamt für den galvanischen Schutz der Stahlbewehrung zur Verfügung steht. Per Definition ist die galvanisch verfügbare Oberfläche ≥ galvanisch aktiven Oberfläche.

Die galvanisch aktive Oberfläche der Metallanode ist mindestens 1,3 mal so groß wie deren geometrische Gesamtoberfläche (GGO), gegebenenfalls 1,7 mal, vorzugsweise doppelt so groß, insbesondere 3 mal so groß.

Geometrische Gesamtoberfläche (GGO): Die geometrische Gesamtoberfläche ist die Oberfläche, die den galvanisch verfügbaren Teil der galvanischen Anode umschließt. Z. B. bei der in Figur 1 a, 1b und 1c dargestellten Lochanode ist dies die Oberfläche des quadratischen Prismas 2a² +4a * b, 2l² + 4l * m, 2n² + 4n * m. Bei einer Scheibenanode (Figur 1 b) ist dies bei einem Plattenabstand von z.B. 0,5 cm die Oberfläche, die das Prisma (3c+2*0,5) * d umschließt = 55 cm².
Bei einer Stapelanode, wie sie in Figur 3 dargestellt, ist die geometrische Gesamtoberfläche (GGO):((n-1) * t + (n*s)² * N *2 + ((m*u+(m-1)v) * ((n-1) * t + n*s))*2, wobei n = Zahl der Löcher mit dem Durchmesser s in der Längsrichtung, N = Verhältnis von Länge/Breite der galvanischen Anode (((n-1) * t + n*s)/z), m = Zahl der gestapelten Anoden im Abstand u. Die GGO lässt gemäß Figur 3 sich auch mit der vereinfachten Formel 2*x*y+2*z*y+2*x*z berechnen.

Gesamtvolumen (GV)/Gesamtgewicht (GG): Ist das Volumen/Gewicht des galvanisch verfügbaren Metalls der galvanischen Metallanode. Wobei sich das das GG aus dem spezifischen Gewicht ρ des galvanischen Metalls ergibt, z. B. Zink 7,15 g/cm3: GG = ρ * GV

Geometrische Oberfläche (GO): Die geometrische Oberfläche ist die Oberfläche, die den galvanisch aktiven Teil der galvanischen Anode umschließt. Z. B. bei der in Figur 1 a, 1b und 1c dargestellten Lochanode ist diese Fläche identisch mit der geometrischen Gesamtoberfläche: GO = 2 * l² + 4 * l * m. Im Fall der Stapelanode gilt für die geometrische Oberfläche, für den Fall, dass nur eine Teilanode (z.B. R1) galvanisch aktiv ist gemäß Figur 3: GO = ((n-1) * t + n*s)² * N *2 + ((m*u+(m-1)v) * (n * t + (n-1)*s))*2 mit m = 1. Oder vereinfacht GO gemäß Figur 3: GO = 2 * x * y + 2 * u * x + 2 * u * y.

Galvanisch aktives Volumen (GAV)/Gewicht (GAG) der galvanischen Anode: Gewicht = Volumen x spez. Gewicht des galvanischen Metalls (Zink 7,15g/cm3), definiert das gesamte für den galvanischen Korrosionsschutz zur Verfügung stehende Metall. Bei Kenntnis des galvanischen Stromflusses und des Anteils an Autokorrosion kann daraus gemäß dem Faraday Gleichung die Nutzungsdauer der galvanischen Anode berechnet oder zumindest abgeschätzt werden.

Geometrisches Gesamtvolumen (GGV): Das geometrische Gesamtvolumen ist das von der Geometrischen Gesamtoberfläche umschlossene Volumen.

Geometrisches Volumen (GeV): Das geometrische Volumen ist das von der geometrischen Oberfläche umschlossene Volumen.

Zum Beispiel gelten für eine Stapelanode (Figur 3), bestehend aus 8 Lagen einer quadratischen Lochanode, mit 100 Maschen bzw. Löchern und folgenden Dimensionen: Teilanode: s = 0,60 cm, Drahtstärke u = 0,12 cm, t = 0,30, Abstand v der Teilanoden 0,2 cm, die Maschenweite wurde so gewählt, dass jeweils 2 Teilanoden galvanisch aktiv sind, folgende Werte für die zuvor definierten Begriffe:
(1) Galvanisch aktive Oberfläche (GAO) = galvanisch aktive Oberfläche von zwei Teilanoden = 234 cm²
(2) Galvanisch verfügbare Oberfläche (GVO) = 8 x GAO = 8 x 117 = 937 cm²
(3) Geometrische Gesamtoberfläche (GGO) mit v = 0,2 cm, x = y = 8,34 cm, z = 2,35 cm: GGO = 2*x² + 4 * x * z = 218 cm²
(4) Geometrische Oberfläche (GO) = GO von zwei Teilanoden = 144 cm²
(5) Gesamtvolumen (GV)/Gewicht (GG): 8 * 5,25 cm³ = 42 cm3, 42 cm³ * 7,15g/cm³ = 300 g
(6) Geometrisches Gesamtvolumen (GGV): 164 cm³
(7) Geometrisches Volumen (GeV): 8,28 cm³
(8) Galvanisch aktives Volumen (GAV): 10,5 cm³
(9) Galvanisch aktives Gewicht (GAG): 75 g

Dies bedeutet, dass die oben als Beispiel angeführte Stapelanode über ein Verhältnis der GVO/GGO = 4,30 und ein Verhältnis von GAO/GO = 1,63 verfügt. Die galvanisch verfügbare Oberfläche - die potentiell aktive innere Oberfläche der Stapelanode - ist somit 4,3-mal so groß als die GGO. Die galvanisch aktive Oberfläche von 234 cm² ist ausreichend groß, um einen verlässlichen Korrosionsschutz der Stahlbewehrung zu gewährleisten.

Das Verhältnis des Gesamtvolumens (GV) zum galvanisch aktiven Volumen GV/GAV = 4,00 ist, dies bedeutet, dass die galvanisch aktive Oberfläche bis mindestens 75% der Nutzungsdauer der galvanischen Anode nicht abnimmt und damit ein verlässlicher Korrosionsschutz bis mindestens 75% der Nutzungsdauer gewährleistet ist. Da der Strombedarf für den Korrosionsschutz der Stahlbewehrung, wie der Fachmann weiß, während des Betriebes auf Grund von Passivierungseffekten und auf Grund der Migration der Chlorid Ionen von der Stahloberfläche Richtung Anode und auf Grund des damit verbunden Chlorid Entzuges abnimmt, ist der Korrosionsschutz bis zum Ende der Nutzungsdauer gewährleistet. Bei einem Stromfluss von 3 mA/m² Stahlbewehrung, einem Wirkungsradius von 20 cm und einer Bewehrungsdichte/Betonoberfläche von 1 ergibt sich ein Stromfluss von 0,38 mA. Aus diesem Stromfluss errechnet sich eine maximale Nutzungsdauer von 74 Jahren und bei einer sehr konservativen worst case Annahme eines Strombedarfs von max. 10 mA/m² Stahlbewehrung eine minimale Nutzungsdauer von 22 Jahren. Realistisch ist die Annahme einer realen Nutzungsdauer von ca. 50% der maximalen Nutzungsdauer - ca. 37 Jahre.

Ein weiterer Vorteil der "galvanischen Lochanode", insbesondere der "galvanischen 3D Anode" ist der, dass die anodischen Abbauprodukte der galvanische Anode, z.B. Zinkhydroxid, über ein großes Volumen der ionenleitfähigen Matrix verteilt und somit quasi verdünnt werden, derart, dass deren Bildung und Ablagerung keinen merkbaren negativen Einfluss auf die Funktion der galvanischen Anode hat.

Das Verhältnis des Volumens der ionenleitenden Matrix/Gesamtvolumen 132/42 = 3,9 im oben angeführten Beispiel bedeutet, dass das Volumen der ionenleitenden Matrix nahezu 4-mal so groß ist als das Volumen des Zinks. In den Porenräumen der ionenleitenden Matrix ist somit ausreichend Platz für anodisch gebildete Produkte, z.B. Zinkhydroxid.

In herkömmlichen Einzelanoden kann die massive Bildung und Ablagerung anodischer Produkte an oder Nahe der Anodenoberfläche zu einer Erhöhung des elektrolytischen Widerstandes der ionenleitfähigen Matrix führen. Die Erhöhung des elektrolytisch Widerstandes der ionenleitfähigen Matrix kann die Funktionsfähigkeit der Anode stark beeinträchtigen, und bereits nach 25 - 50%iger Nutzungsdauer zu einem Ausfall der galvanischen Anode führen.

Die Herstellung des erfindungsgemäßen Anodensystems erfolgt durch fachgerechtes Einbetten der strukturierten galvanischen Stapelanode in eine geeignete ionenleitfähige Matrix. Beim Verfahren zur Herstellung eines galvanischen Anodensystems kann das galvanische Anodensystem vorgefertigt sein. Eine Möglichkeit, unter mehreren Möglichkeiten, ist die Einbettung in ein flüssiges, nach einer Ruhezeit aushärtendes Bindemittel, wie es in EP 2313352 B1 und in US 8,394,193 beschrieben ist. Es kann jedoch auch ein Material verwendet werden, das eine elastische oder gelartige Matrix bildet. Vorzugsweise sollte die ionenleitfähige Matrix eine Passivierung der galvanischen Metallanode verhindern und/oder eine ausreichende galvanische Aktivität der galvanischen Metallanode gewährleisten. Die ionenleitfähige Matrix sollte jedoch auch eine Selbstkorrosion der galvanischen Anode verhindern, der pH Wert der ionenleitfähigen Matrix sollte daher nicht kleiner als pH 7 sein, vorzugsweise grösser als pH 8. Sehr gute Ergebnisse werden mit einer ionenleitfähigen Matrix nach EP 2313352 B1 erhalten, die einen pH Wert von > 9 aufweist.

Der Wirkungsbereich von Einzelanoden, die in den Beton eingesetzt und/oder eingebettet werden, ist per Definition grösser als deren Querschnitt bzw. deren geometrische Oberfläche. Der Wirkungsbereich von Einzelanoden, die auf der Betonoberfläche angebracht werden, ist üblicherweise nicht wesentlich grösser als deren der Betonoberfläche zugewandten geometrischen Oberfläche. Vor allem von flächig auf der Betonoberfläche aufgeklebten galvanischen Zinkfolien, ist der Wirkungsbereich quasi identisch mit der geometrischen Oberfläche der galvanischen Anode.

Eine Variation der "Stapelanode" ist die Einbettung von mindestens zwei Lagen "Lochanoden" in das Bindemittel. Auf diese Weise wird sichergestellt, dass bis zu mindestens 50%iger Nutzungsdauer die galvanisch aktive Oberfläche nahezu konstant bleibt und weiter, dass die galvanisch verfügbare Oberfläche zumindest verdoppelt wird. Diese zweite Lage wird vorzugsweise in Bereichen aufgetragen, in denen hohe galvanische Ströme, z. B in Folge hoher Chlorid Kontamination und/oder hoher Feuchte des Betons, erwartet werden.

Derart kann nicht nur die galvanisch aktive Oberfläche vergrößert sondern auch die Nutzungsdauer ohne großen Aufwand und ohne relative Mehrkosten vervielfacht werden.

Herkömmliche galvanische Oberflächenanoden, z. B. auf der Basis von Zinkfolien, die auf der Betonoberfläche aufgebracht werden, zeichnen sich dadurch aus, dass in den Bereichen hoher galvanischer Ströme, die vor allem in Bereichen hohen Korrosionsrisikos infolge hoher Chlorid Kontamination und/oder hoher Feuchte fließen, die Zinkfolie sehr viel rascher abgebaut wird und ausgerechnet dort Löcher in der Folie entstehen und damit in diesem Bereich kein Korrosionsschutz mehr besteht.

Die wie oben beschrieben strukturierte Oberflächenanode bleibt auch in diesen Bereichen hohen Korrosionsrisikos unvermindert aktiv.

### Beispiel 1:

Eine Anode wurde wie folgt, hergestellt
Aus einem Zinkgitter (Zinkgehalt > 99,2 Gew.%) mit einer inneren Maschenweite (s) von 5 mm (siehe s in Figur 3), einer Stegbreite (t) von 2,6 mm (siehe t in Figur 3) und einer Dicke (u) (Drahtstärke) von 1,2 mm (siehe u in Figur 3) wurden 3 cm breite und 10 cm lange Streifen geschnitten. Jeder Zinkgitterstreifen hat eine geometrische Gesamtoberfläche von 30 cm² und eine galvanische verfügbare Oberfläche von 50 cm² und ein Gewicht von 13g.

Acht solcher Zinkgitter wurden so übereinander zu einem Stapel gelegt, dass die Gitterlöcher übereinander lagen und eine durchgehende zylindrische Öffnung bildeten. Ein galvanisierter Stahldraht (Drahtstärke 1 mm) wurde an einem Ende durch die zylindrische Öffnung geführt, an der Unterseite der Anode diagonal zum anderen Ende der Anode gelegt und von dort wieder durch die zylindrische Öffnung nach oben geführt, und zwar so, dass an beiden Enden der Draht ca. 30 cm herausragte - der Draht dient als Verbindungsdraht für die elektrische Verbindung der galvanischen Anode zum zu schützenden Bewehrungsstahl. Die einzelnen Gitterstreifen und der galvanisierte Draht wurden mit einem Zinn-Zink-Lot miteinander verbunden.

Die Höhe der Stapelanode betrug 18 mm, sodass der mittlere Abstand (v) (siehe v in Figur 3) zwischen den Zinkgitterstreifen ca. 1 mm betrug.

Die geometrische Gesamtoberfläche der galvanischen Stapelanode betrug 106 cm², die galvanisch verfügbare Oberfläche betrug 403 cm², die galvanisch aktive Oberfläche betrug 101 cm². Das Gewicht der Stapelanode betrug 100 g.

Die galvanische Stapelanode wurde wie folgt in eine ionenleitfähige Matrix eingebettet:
Es wurden 250 g eines Bindemittels, wie es in EP 2313352 B1 beschrieben ist, hergestellt: Es wurden 100 g Komponente A, 50 g Komponente B und 130 g Füllstoff (inerter Marmorsand 0,2 - 0,5 mm) miteinander vermischt.

In eine Form mit den Innenmassen L = 12 cm, B = 4,5 cm, H = 3,5 cm wurden 250 g Bindemittel gefüllt. Die mit dem Bindemittel gefüllte Form wurde auf einen Vibriertisch gelegt, die Stapelanode auf das Bindemittel gelegt und unter Vibrieren vollständig eingebettet,
und zwar so, dass die Seiten und Kanten der Stapel-Anode mindestens 5 mm von den Wänden der Form entfernt waren. Nach dem vollständigen Aushärten des Bindemittels (2 Wochen bei 35°C) war die galvanische Anode betriebsbereit.

Die galvanische Anode wurde in einem Kunststoffbehälter (3 Liter) auf ein Bewehrungsstahlgitter (8 Stahlstäbe, ∅ 10 mm, 10 cm lang, durch einen aufgeschweißten 8 mm Stahlstab miteinander verbunden) gelegt. Das Bewehrungsstahlgitter lag auf einer Aquariumsbelüftungsplatte. Die galvanische Anode wurde über einen Shunt-Widerstand von 1 Ohm mit dem Bewehrungsstahlgitter elektrisch verbunden. In den Kübel wurden ca. 2 Liter 3%iger Natriumchlorid Lösung gefüllt, sodass die gesamte Anordnung mit mindestens 1 cm Salzlösung überdeckt war. Nach dem Einschalten der Belüftung wurde der galvanische Strom durch on-line Aufzeichnung des Spannungsabfalles über den Shunt-Widerstand gemessen.

Folgende Stromwerte über die Zeit (nach der elektrischen Verbindung Anode-Kathode wurden registriert.

| **Zeit** | **Galvanischer Strom** | **Zeit** | **Galvanischer Strom** |
|---|---|---|---|
| 1 Stunde | 20 mA | 6 Monate | 2,3 mA |
| 1 Tag | 14 mA | 12 Monate | 2,4 mA |
| 7 Tage | 8 ma | 2 Jahre | 2,2 mA |
| 14 Tage | 5 mA | 3 Jahre | 2,1mA |
| 28 Tage | 3 mA | 5 Jahre | 1,5 mA |
| 3 Monate | 2,5 mA | | |

Die Ergebnisse zeigen, dass unmittelbar nach dem Einschalten ein hoher Einschaltstrom fliesst (14 - 20 mA), der sich nach ca. 1 - 3 Monaten bei 2,5 - 3 mA stabilisiert. Bis ca. ¾ der Nutzungsdauer der galvanischen Anode bleibt der galvanische Strom nahezu konstant, nach dem Verbrauch von ca. ¾ des Zinks (nach ca. 4,2 Jahren) nimmt der galvanische Stromfluss ab.

### Beispiel 2:

Eine galvanische Anode, die wie in Beispiel 1 beschrieben, hergestellt wurde, wurde im Rahmen einer Betonreparatur eines mit Chlorid kontaminierten (bis 3,5 Gew.% Chlorid/Zementgewicht des Betons) Brückenlängsträgers verwendet:
Der Brückenlängsträger wies an einer Stelle, nahe des Längsträgerkopfes, sichtbare Schäden - Betonabplatzungen, Risse, Rostfahnen, auf. Von der beschädigten Stelle wurde der Beton durch Hochdruckwasserstrahlen auf einer Fläche von ca. 1 × 2 m bis hinter die Stahlbewehrung entfernt. An den Rändern der Reparaturstelle zum Altbeton hin, wurden mittels des galvanischen Drahtes, der um den jeweiligen Bewehrungsstahl gewickelt wurde, insgesamt 12 Anoden am Bewehrungsstahl befestigt und in Reparaturmörtel eingebettet. Der Reparaturmörtel enthielt max. 1 % Kunsstoffdispersion und war mit einer Leitfähigkeit von 18 kOhm.cm spezifiziert.

3 zufällig ausgewählte Anoden wurden über einen Shunt-Widerstand von 1 Ohm mit der Stahlbewehrung verbunden, so , dass der Spannungsabfall über den Shunt-Widerstand on-line gemessen werden konnte: es wurden zwei 3,5 mm² Kupferlitzen vor und nach dem Shunt-Widerstand angelötet und die Litzen in einem in ca. 1 m Entfernung mit einem Spannungs/Stromkonverter verbunden. Der Konverter war über eine Analog/Digital Konvertereinheit mit einer digitalen Datenaufzeichnungsanlage verbunden.

Die gemessenen galvanischen Ströme lagen im Bereich von 0,7 - 0,9 mA/Anode über einen Beobachtungszeitraum von 5 Jahren. Dies ergibt einen Stromfluss von 4,2 - 5,4 mA/m² Bewehringsstahloberfläche. Aus diesen Daten lässt sich eine Nutzungsdauer von ca. 15 - 20 Jahren abschätzen. Der Bewehrungsstahl wurde bis max. - 0,665 mV polarisiert, sodass keine Gefahr einer Wasserstoffversprödung des Stahls bestand. Sogenannte Incipient Anodes - neue Korrosionsstellen im Randbereich der Reparaturstelle wurden auch nach 5 Jahren nicht beobachtet. Potentialfeldmessungen des Bewehrungsstahls ergaben keinen Hinweis auf eine Korrosionsgefahr.

## Patentansprüche

1. Galvanisches Anodensystem für den Korrosionsschutz von Stahl in Beton,
**dadurch gekennzeichnet dass** es eine galvanische Stapelanode aus übereinandergeschichteten galvanischen Teilanoden, ausgewählt aus Lochplatte, Lochblech, Gitter, oder Netz, aus Zink und dessen Legierungen umfasst und
wobei eine Dicke der jeweiligen Teilanode ≤ zweimal ein Lochdurchmesser der jeweiligen Teilanode ist, sodass eine galvanisch verfügbare Oberfläche der galvanischen Stapelanode grösser ist als deren geometrische Gesamtoberfläche und dass die galvanisch verfügbare Oberfläche der galvanischen Stapelanode größer einer galvanisch aktiven Oberfläche der galvanischen Stapelanode ist, wobei die galvanisch aktive Oberfläche Teil der galvanischen Stapelanode ist, von dem galvanischer Strom zum Bewehrungsstahl fließt und galvanisch aktives Metall abgebaut wird und in anodische Produkte umgewandelt wird, und wobei die galvanisch verfügbare Oberfläche die Oberfläche der Stapelanode ist, die insgesamt für den galvanischen Schutz der Stahlbewehrung zur Verfügung steht; per Definition ist die galvanisch verfügbare Oberfläche größer als die galvanischen aktive Oberfläche.

2. Galvanisches Anodensystem für den Korrosionsschutz von Stahl in Beton nach Anspruch 1, **dadurch gekennzeichnet, dass** die galvanisch aktive Oberfläche der galvanischen Stapelanode während des Betriebs der galvanischen Stapelanode über einen Bereich von > 75 % konstant bleibt.

3. Galvanisches Anodensystem für den Korrosionsschutz von Stahl in Beton nach Anspruch 1 oder 2, **dadurch gekennzeichnet, dass** die galvanisch verfügbare Oberfläche der galvanischen Stapelanode mindestens 1,7 mal so groß ist wie deren Gesamtoberfläche.

4. Galvanisches Anodensystem für den Korrosionsschutz von Stahl in Beton nach einem der Ansprüche 1 bis 3, wobei der Lochdurchmesser in der Teilanode größer ist als der Abstand der Löcher.

5. Galvanisches Anodensystem für den Korrosionsschutz von Stahl in Beton nach einem der Ansprüche 1 bis 4 mit einer ionenleitfähigen Matrix, **dadurch gekennzeichnet, dass** die galvanische Stapelanode in die ionenleitfähige Matrix eingebettet ist.

6. Galvanisches Anodensystem für den Korrosionsschutz von Stahl in Beton nach Anspruch 5, **dadurch gekennzeichnet, dass** die ionenleitfähige Matrix aushärtet.

7. Galvanisches Anodensystem für den Korrosionsschutz von Stahl in Beton nach Anspruch 5 oder 6, **dadurch gekennzeichnet, dass** die ionenleitfähige Matrix einen pH von ≥ 7 aufweist.

8. Galvanisches Anodensystem für den Korrosionsschutz von Stahl in Beton nach einem der Ansprüche 6 bis 7, **dadurch gekennzeichnet, dass** die ionenleitfähige Matrix die galvanische Stapelanode allseitig umhüllt.

9. Galvanisches Anodensystem für den Korrosionsschutz von Stahl in Beton nach einem der Ansprüche 6 bis 8, **dadurch gekennzeichnet, dass** das Volumen der ionenleitenden Matrix 4-mal so groß ist wie das Volumen des Zinks.

10. Galvanisches Anodensystem für den Korrosionsschutz von Stahl in Beton nach einem der Ansprüche 6 bis 9, **dadurch gekennzeichnet, dass** das Volumen der ionenleitfähige Matrix 1,5 mal so groß ist als das galvanisch verfügbare Volumen der galvanischen Stapelanode.

11. Galvanisches Anodensystem für den Korrosionsschutz von Stahl in Beton nach einem der Ansprüche 1 bis 10, **dadurch gekennzeichnet, dass** die galvanische Stapelanode aus mindestens 2 übereinander geschichteten galvanischen Teilanoden besteht.

12. Verfahren zur Herstellung eines galvanischen Anodensystems nach einem der Ansprüche 5 - 11 **dadurch gekennzeichnet, dass** es durch das Einbetten der galvanischen Stapelanode in eine ionenleitfähige Matrix hergestellt wird.

13. Verfahren nach Anspruch 12, **dadurch gekennzeichnet, dass** das galvanische Anodensystem vorgefertigt wird.

14. Verfahren nach Anspruch 13, **dadurch gekennzeichnet, dass** das vorgefertigte galvanische Anodensystem auf den Beton aufgeklebt und/oder in den Beton eingebettet wird.

## Claims

1. Galvanic anode system for the corrosion protection of steel in concrete, **characterized in that** it comprises a galvanic stacking anode made of stacked galvanic partial anodes, selected from perforated plate, perforated sheet, grid or mesh, made of zinc and its alloys, and wherein a thickness of the respective partial anode is ≤ twice a hole diameter of the respective partial anode, so that a galvanically available surface area of the galvanic stacking anode is greater than its total geometric surface area and that the galvanically available surface area of the galvanic stacking anode is greater than a galvanically active surface area of the galvanic stacking anode, wherein the galvanically active surface area is part of the galvanic stacking anode, from which galvanic current flows to reinforcing steel and galvanically active metal is degraded and converted into anodic products, and wherein the galvanically available surface area is the total surface area of the stacking anode available for galvanic protection of the steel reinforcement; by definition, the galvanically available surface area is greater than the galvanically active surface area.

2. Galvanic anode system for the corrosion protection of steel in concrete according to claim 1, **characterized in that** the galvanically active surface of the galvanic stacking anode remains constant over a range of > 75% during the operation of the galvanic stacking anode.

3. Galvanic anode system for the corrosion protection of steel in concrete according to one of claims 1 or 2, **characterized in that** the galvanically available surface area of the galvanic stacking anode is at least 1.7 times as large as its total surface area.

4. Galvanic anode system for the corrosion protection of steel in concrete according to any one of claims 1 to 3, wherein the hole diameter in the partial anode is greater than the spacing of the holes.

5. Galvanic anode system for the corrosion protection of steel in concrete according to one of claims 1 to 4 with an ion-conductive matrix, **characterized in that** the galvanic stacking anode is embedded in the ion-conductive matrix.

6. Galvanic anode system for the corrosion protection of steel in concrete according to claim 5, **characterized in that** the ion-conductive matrix hardens.

7. Galvanic anode system for the corrosion protection of steel in concrete according to one of claims 5 or 6, **characterized in that** the ion-conductive matrix has a pH of ≥ 7.

8. Galvanic anode system for the corrosion protection of steel in concrete according to one of claims 6 to 7, **characterized in that** the ion-conductive matrix envelops the galvanic stacking anode on all sides.

9. Galvanic anode system for the corrosion protection of steel in concrete according to one of claims 6 to 8, **characterized in that** the volume of the ion-conducting matrix is 4 times as large as the volume of the zinc.

10. Galvanic anode system for the corrosion protection of steel in concrete according to one of claims 6 to 9, **characterized in that** the volume of the ion-conductive matrix is 1.5 times as large as the galvanically available volume of the galvanic stacking anode.

11. Galvanic anode system for the corrosion protection of steel in concrete according to one of claims 1 to 10, **characterized in that** the galvanic stacking anode consists of at least 2 galvanic partial anodes stacked on top of one another.

12. Process for producing a galvanic anode system according to one of claims 5-11, **characterized in that** it is produced by embedding the galvanic stacking anode in an ion-conductive matrix.

13. Method according to claim 12, **characterized in that** the galvanic anode system is prefabricated.

14. Method according to claim 13, **characterized in that** the prefabricated galvanic anode system is bonded to the concrete and/or embedded in the concrete.

## Revendications

1. Système d'anode galvanique pour la protection contre la corrosion de l'acier dans le béton,
**caractérisé en ce qu'**il comprend une anode galvanique empilée constituée d'anodes galvaniques partielles superposées, choisies parmi une plaque perforée, une tôle perforée, une grille ou un filet, en zinc et ses alliages, et
une épaisseur de l'anode partielle respective est ≤ deux fois un diamètre de trou de l'anode partielle respective, de sorte qu'une surface galvaniquement disponible de l'anode galvanique empilée est plus grande que sa surface géométrique totale et que la surface galvaniquement disponible de l'anode galvanique empilée est plus grande qu'une surface galvaniquement active de l'anode galvanique empilée, la surface galvaniquement active faisant partie de l'anode galvanique empilée, à partir de laquelle le courant galvanique circule vers l'acier d'armature, et le métal galvaniquement actif est dégradé et est converti en produits anodiques, et la surface galvaniquement disponible est la surface de l'anode empilée qui est disponible au total pour la protection galvanique de l'acier d'armature ; par définition, la surface galvaniquement disponible est plus grande que la surface galvaniquement active.

2. Système d'anode galvanique pour la protection contre la corrosion de l'acier dans le béton selon la revendication 1,
**caractérisé en ce que** la surface galvaniquement active de l'anode galvanique empilée reste constante sur une plage de > 75 % pendant le fonctionnement de l'anode galvanique empilée.

3. Système d'anode galvanique pour la protection contre la corrosion de l'acier dans le béton selon la revendication 1 ou 2,
**caractérisé en ce que** la surface galvaniquement disponible de l'anode galvanique empilée est au moins 1,7 fois plus grande que sa surface totale.

4. Système d'anode galvanique pour la protection contre la corrosion de l'acier dans le béton selon l'une des revendications 1 à 3,
dans lequel le diamètre de trou dans l'anode partielle est plus grand que l'espacement des trous.

5. Système d'anode galvanique pour la protection contre la corrosion de l'acier dans le béton selon l'une des revendications 1 à 4, comprenant une matrice conductrice d'ions,
**caractérisé en ce que** l'anode galvanique empilée est enrobée dans la matrice conductrice d'ions.

6. Système d'anode galvanique pour la protection contre la corrosion de l'acier dans le béton selon la revendication 5,
**caractérisé en ce que** la matrice conductrice d'ions durcit.

7. Système d'anode galvanique pour la protection contre la corrosion de l'acier dans le béton selon la revendication 5 ou 6,
**caractérisé en ce que** la matrice conductrice d'ions présente un pH ≥ 7.

8. Système d'anode galvanique pour la protection contre la corrosion de l'acier dans le béton selon l'une des revendications 6 à 7,
**caractérisé en ce que** la matrice conductrice d'ions enveloppe de tous côtés l'anode galvanique empilée.

9. Système d'anode galvanique pour la protection contre la corrosion de l'acier dans le béton selon l'une des revendications 6 à 8,
**caractérisé en ce que** le volume de la matrice conductrice d'ions est 4 fois plus grand que le volume du zinc.

10. Système d'anode galvanique pour la protection contre la corrosion de l'acier dans le béton selon l'une des revendications 6 à 9,
**caractérisé en ce que** le volume de la matrice conductrice d'ions est 1,5 fois plus grand que le volume galvaniquement disponible de l'anode galvanique empilée.

11. Système d'anode galvanique pour la protection contre la corrosion de l'acier dans le béton selon l'une des revendications 1 à 10,
**caractérisé en ce que** l'anode galvanique empilée est constituée d'au moins 2 anodes galvaniques partielles superposées.

12. Procédé de fabrication d'un système d'anode galvanique selon l'une des revendications 5 à 11,
**caractérisé en ce qu'**il est réalisé par l'enrobage de l'anode galvanique empilée dans une matrice conductrice d'ions.

13. Procédé selon la revendication 12,
**caractérisé en ce que** le système d'anode galvanique est préfabriqué.

14. Procédé selon la revendication 13,
**caractérisé en ce que** le système d'anode galvanique préfabriqué est collé sur le béton et/ou enrobé dans le béton.
